(19) **Europäisches Patentamt**
**European Patent Office**
**Office européen des brevets**

(11) **EP 3 218 989 B1**

(12) **FASCICULE DE BREVET EUROPEEN**

(45) Date de publication et mention
de la délivrance du brevet:
**12.12.2018 Bulletin 2018/50**

(21) Numéro de dépôt: **15794522.1**

(22) Date de dépôt: **09.11.2015**

(51) Int Cl.:
***H02K 1/24*** *(2006.01)*        ***H02K 1/22*** *(2006.01)*
*H02K 21/04* *(2006.01)*

(86) Numéro de dépôt international:
**PCT/EP2015/076079**

(87) Numéro de publication internationale:
**WO 2016/075084 (19.05.2016 Gazette 2016/20)**

(54) **ROTOR DE MACHINE ÉLECTRIQUE TOURNANTE**

ROTOR EINER KLAUENPOLMASCHINE

CLAW-POLE ROTOR OF DYNAMO-ELECTRIC MACHINE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **12.11.2014 FR 1458118**
**06.08.2015 PCT/FR2015/052173**

(43) Date de publication de la demande:
**20.09.2017 Bulletin 2017/38**

(73) Titulaire: **Valeo Equipements Electriques Moteur
94046 Créteil Cedex (FR)**

(72) Inventeurs:
• **CALON, Stéphane**
**F-62630 Etaples sur Mer (FR)**
• **KADIRI, Mostafa**
**F-62520 Le Touquet (FR)**
• **DJEBBAR, Amar**
**F-62630 Etaples (FR)**
• **DESENCLOS, Stéphane**
**F-62630 Tubersent (FR)**
• **POUCHELLE, Benjamin**
**F-62630 Etaples (FR)**
• **DUFOUR, Guillaume**
**F-62600 Berk sur Mer (FR)**

(56) Documents cités:
**DE-A1- 1 932 641      US-A- 4 201 930
US-A- 5 449 962**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

DOMAINE TECHNIQUE DE L'INVENTION

La présente invention concerne un rotor de machine électrique tournante, telle qu'un alternateur ou un alterno-démarreur, notamment pour véhicule automobile.

L'invention s'applique, en particulier, à un rotor de machine électrique tournante, telle qu'un alternateur ou un alterno-démarreur, notamment pour véhicule automobile qui comporte :

- un arbre central ;
- un noyau annulaire coaxial à l'arbre ;
- un bobinage qui s'étend radialement autour du noyau ;
- et deux roues polaires qui sont agencées axialement de part et d'autre du noyau et du bobinage.

ETAT DE LA TECHNIQUE

Le document US 2007/0024153 décrit un rotor possédant deux roues polaires. Chaque roue polaire est constituée de plusieurs dents. Le sommet de chaque dent est décalé et les côtés de chaque dent sont légèrement courbés. Le décalage du sommet de la dent et la courbure des côtés de la dent réduit le bruit magnétique généré par le rotor. Toutefois cette configuration ne réduit pas suffisamment la somme des bruits magnétiques tout en évitant les courts-circuits magnétiques entre les deux roues polaires.

Les documents US 4201930A, US 5449962A et DE 1932641 A1, divulguent des griffes asymétriques, dont le côté le plus long d'une dent est toujours vis-à-vis du côté plus court de la dent adjacente.

Le but de la présente invention est de remédier à ces inconvénients et de proposer un rotor d'un alternateur permettant de réduire la somme des bruits magnétiques tout en limitant les courts-circuits magnétiques.

La présente invention vise à remédier ces inconvénients.

À cet effet, selon un premier aspect, l'invention a pour objet un rotor de machine électrique tournante, comportant :

- un arbre central ;
- un noyau annulaire coaxial à l'arbre ;
- un bobinage qui s'étend radialement autour du noyau ;
- une première roue polaire et une deuxième roue polaire agencées axialement de part et d'autre du noyau et du bobinage, chaque roue polaire comportant une pluralité de dents de forme triangulaire dont la base est tangente à la roue polaire et comportant un premier côté, et un deuxième côté, de sorte que chaque premier côté de la première roue polaire soit en vis-à-vis d'un deuxième côté de la deuxième roue polaire, au niveau de l'espace inter-dents ;
les dents de l'une de la première ou deuxième roue polaire étant telle que la longueur du premier côté, noté a, est supérieure strictement à la longueur du deuxième côté, noté b ;
les dents de l'autre de la première ou deuxième roue polaire étant telle que la longueur du premier côté, noté a' est inférieure strictement à la longueur du deuxième côté, noté b'.

Dans un mode de réalisation, la pluralité des dents de la première roue polaire a un ratio, noté R1, égal à 1-(a/b) et la pluralité des dents de la deuxième roue polaire a un ratio, noté R2, égal à 1-(a'/b'), R1 étant égal à R2, en valeur absolue.

Cette configuration permet d'avoir une largeur constante entre les griffes.

Dans un mode de réalisation, les ratios R1 et R2 sont tels qu'ils sont différent de zéro, chaque ratio étant inférieur ou égal à 0,8, notamment inférieur ou égal à 0,5.

Dans un mode de réalisation, l'arbre comporte un tronçon d'entrainement dont la section, suivant un plan radial, est non lisse, et qui est emmanchée axialement à force dans un alésage de fixation d'un composant du rotor de manière à solidariser en rotation l'arbre avec la première roue polaire et la deuxième roue polaire.

Dans un mode de réalisation, la distance entre une extrémité de la base d'une dent de la première roue polaire et l'extrémité proximale de la base d'une dent de la deuxième roue polaire est supérieure à la demi largeur de la base d'une dent de la première roue polaire ou de la base d'une dent de la deuxième roue polaire.

Ainsi, cette distance évite d'avoir des courts-circuits entre la première roue polaire et la deuxième roue polaire.

Dans un mode de réalisation, le sommet des dents de chacune des roues polaires est à équidistance entre les extrémités des bases adjacentes au sommet des dents de l'autre roue polaire lorsque les deux roues polaires sont assemblées.

Ainsi, la première roue polaire et la deuxième roue polaire ont la même configuration.

Dans un mode de réalisation, le premier côté ou le deuxième côté comprend un bord arrondi.

Ainsi, le bord arrondi évite les chocs entre deux dents des deux roues polaires et réduit la somme des bruits magnétiques.

Selon un mode de réalisation le rotor comprend en outre des aimants, les aimants étant agencés entre deux dents adjacentes qui appartiennent aux première et deuxième roues polaires respectivement.

Selon un mode de réalisation, les aimants, notamment de forme sensiblement parallélépipédique, sont à bords parallèles.

L'invention a également pour objet, indépendamment ou en combinaison avec ce qui précède, un rotor de machine électrique tournante, qui comporte :

- un arbre central ;
- un noyau annulaire coaxial à l'arbre ;
- un bobinage qui s'étend radialement autour du noyau ;
- une première roue polaire et une deuxième roue polaire qui sont agencées axialement de part et d'autre du noyau et du bobinage ;

chaque roue polaire comporte une pluralité de dents de forme triangulaire dont la base est tangente à la roue polaire et comprend un premier côté, noté a, et un deuxième côté, noté b ;

la pluralité des dents de la première roue polaire étant telle qu'il existe une différence de longueur entre le premier côté et le deuxième côté; les première et deuxième roues polaires étant en retard par rapport au sens de rotation du rotor.

Dans un mode de réalisation, la pluralité des dents de la première roue polaire a un ratio, noté R1, égal à 1-(a/b) et la pluralité des dents de la deuxième roue polaire a un ratio, noté R2, égal à 1-(a'/b'), R1 étant égal à R2.

Dans un mode de réalisation, les ratios R1 et R2 sont tels qu'ils sont différent de zéro, chaque ratio étant inférieur ou égal à 0,8, notamment inférieur ou égal à 0,5.

Selon un mode de réalisation le rotor comprend en outre des aimants, les aimants étant agencés entre deux dents adjacentes qui appartiennent aux première et deuxième roues polaires respectivement.

L'invention a encore pour objet, indépendamment ou en combinaison avec ce qui précède, un rotor de machine électrique tournante, qui comporte :

- un arbre central ;
- un noyau annulaire coaxial à l'arbre ;
- un bobinage qui s'étend radialement autour du noyau ;
- une première roue polaire et une deuxième roue polaire qui sont agencées axialement de part et d'autre du noyau et du bobinage ;

chaque roue polaire comporte une pluralité de dents de forme triangulaire dont la base est tangente à la roue polaire et comprend un premier côté, noté a, et un deuxième côté, noté b ;

la pluralité des dents de la première roue polaire étant telle qu'il existe une différence de longueur entre le premier côté et le deuxième côté;

les première et deuxième roues polaires étant en avance par rapport au sens de rotation du rotor.

Dans un mode de réalisation, la pluralité des dents de la première roue polaire a un ratio, noté R1, égal à 1-(a/b) et la pluralité des dents de la deuxième roue polaire a un ratio, noté R2, égal à 1-(a'/b'), R1 étant différent de R2.

En variante, R1 est égal à R2.

Dans un mode de réalisation, les ratios R1 et R2 sont tels qu'ils sont compris entre -0,8 et -0,26, notamment entre -0,5 et -0,26.

Selon un mode de réalisation le rotor comprend en outre des aimants, les aimants étant agencés entre deux dents adjacentes qui appartiennent aux première et deuxième roues polaires respectivement.

L'invention concerne enfin une machine électrique tournante, comprenant un rotor tel que décrit précédemment.

BREVE DESCRIPTION DES FIGURES

D'autres avantages, buts et caractéristiques de la présente invention ressortiront de la description qui va suivre faite, dans un but explicatif et nullement limitatif, en regard des dessins annexés, dans lesquels :

- la figure 1 représente une vue schématique des dents d'une première roue polaire et d'une deuxième roue polaire, selon l'état de la technique, le rotor étant observé latéralement,

- la figure 2 représente une vue schématique des dents d'une première roue polaire et d'une deuxième roue polaire, selon l'état de la technique, le rotor étant observé latéralement,

- la figure 3 représente une vue schématique des dents d'une première roue polaire et d'une deuxième roue polaire, selon l'état de la technique, le rotor étant observé latéralement,

- la figure 4 représente une vue schématique des dents d'une première roue polaire et d'une deuxième roue polaire, selon l'état de la technique, le rotor étant observé latéralement,

- la figure 5 représente un graphique de la mesure du bruit de deux rotors,

- la figure 6 représente une vue schématique d'une dent symétrique et d'une dent dissymétrique,

- la figure 7 représente une vue schématique de l'implantation d'une dent d'une roue polaire par rapport à deux dents de l'autre roue polaire,

- la figure 8 représente l'implantation de deux dents de deux roues polaires et le décalage minimum à avoir lorsque les deux roues polaires sont assemblées,

- la figure 9 représente une vue schématique des dents d'une première roue polaire et d'une deuxième roue polaire, selon l'invention, le rotor étant observé latéralement,

- la figure 10 représente une vue schématique des dents d'une première roue polaire et d'une deuxième roue polaire, selon l'invention, le rotor étant observé latéralement.

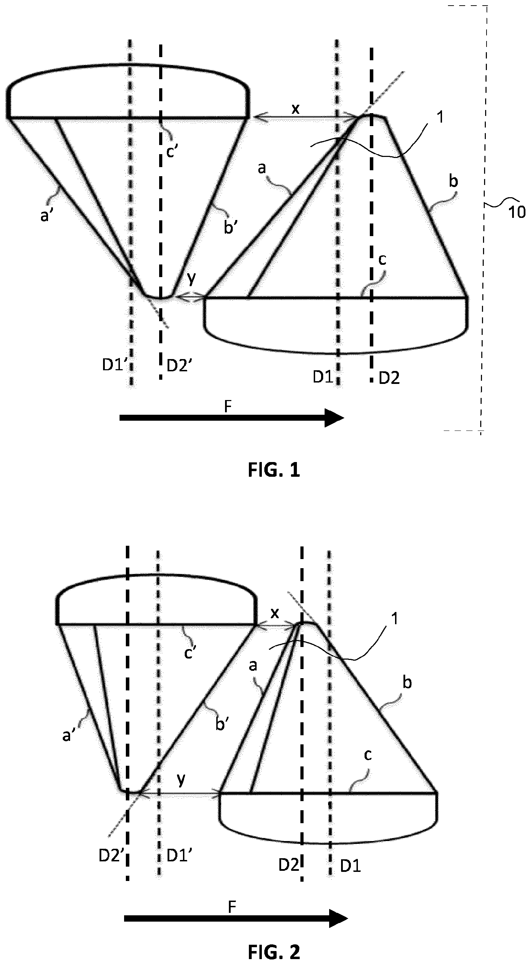

La figure 1 montre une dent, appelée également griffe, d'une première roue polaire et une dent d'une deuxième roue polaire, selon l'état de la technique. Une dent a une forme triangulaire avec une base, un premier côté et un deuxième côté. Le sommet du triangle est formée par le premier côté et le deuxième côté.

Le rotor possède deux roues polaires qui sont assemblées pour que les dents s'emboîtent face à face et les unes à côté des autres. La distance entre le sommet d'une dent d'une première roue polaire par rapport à la base adjacente de la deuxième roue polaire est notée x. La distance entre la base de la première roue polaire et la base adjacente du sommet de la deuxième roue polaire est notée y. Sur cette figure, le sommet de la dent correspond à une des extrémités du premier côté a du triangle de la dent.

La base de la dent, notée c et c', est tangente à la roue polaire (non représentée). Une droite D1 est perpendiculaire à la base c et passe par le milieu de ladite base c. De la même manière, une droite D1' est perpendiculaire à la base c' et passe par le milieu de ladite base c'.

La forme triangulaire de la dent montre qu'il y a un décalage entre la droite D2 passant par le sommet de la dent et la droite D1. De la même façon, il est montré sur la figure un décalage sur l'autre dent entre la droite D2' passant par le sommet de la dent et la droite D1'. Les droites D2 et D2' sont respectivement parallèles aux droites D1 et D1'.

Le décalage provient de la différence de longueur entre le premier côté a d'une dent et le deuxième côté b de la même dent. En effet, le premier côté a, a' est plus grand que le deuxième côté b, b'. Le ratio de 1-a/b (ou 1-a'/b') est variable en fonction de la forme de la dent souhaitée. Il peut varier de 0 à -0,5 ou de 0 à 0,5, ou toute autre valeur comprise dans cette fourchette.

Par exemple, a=19,58mm et b=13,58mm, le ratio donne :

$$1-19,58/13,85=-0,41.$$

Le premier côté a, a' comprend un bord arrondi. Le deuxième côté b, b' est un bord constitué d'une arrête.

La flèche F montre le sens de rotation du rotor.

Le décalage de la droite D2 par rapport à la droite D1 est dans le sens de la flèche F.

La figure 2 montre un autre exemple connu. Il est montré un décalage de la droite D2 par rapport à la droite D1, ce décalage est dans le sens inverse de la flèche F. Cette figure retrouve les mêmes caractéristiques que la figure 1 à l'exception que le premier côté a, a' est plus petit que le deuxième côté b, b'.

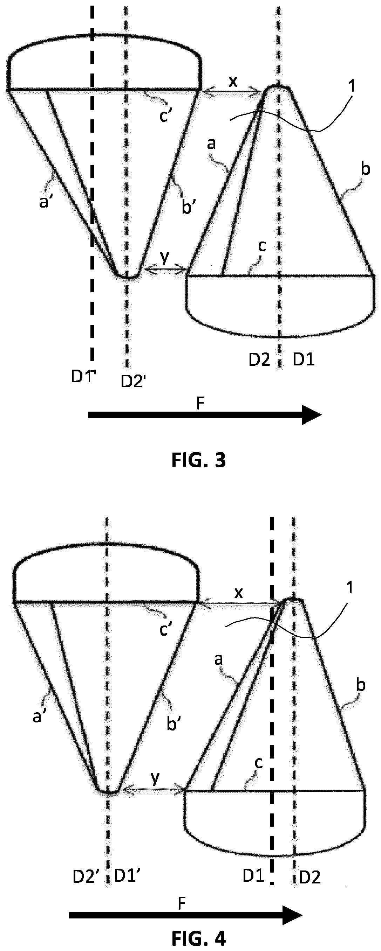

La figure 3 montre un autre exemple connu. Sur cette figure, la dent de la première roue polaire est constituée d'un premier côté a identique au deuxième côté b. Les droites D1 et D2 de la dent de la première roue polaire sont confondues.

La dent de la deuxième roue polaire possède son premier côté a' plus grand que le deuxième côté b'. Cette différence implique un décalage entre la droite D2' et D1'. La droite D2' est avant la droite D1' par rapport au sens de la flèche F.

La figure 4 montre un autre exemple connu. Sur cette figure, la dent de la deuxième roue polaire est constituée d'un premier côté a identique au deuxième côté b. Les droites D1' et D2' de la dent de la deuxième roue polaire sont confondues.

La dent de la première roue polaire possède son premier côté a plus grand que le deuxième côté b. Cette différence implique un décalage entre la droite D1 et D2. La droite D2 est après la droite D1 par rapport au sens de la flèche F.

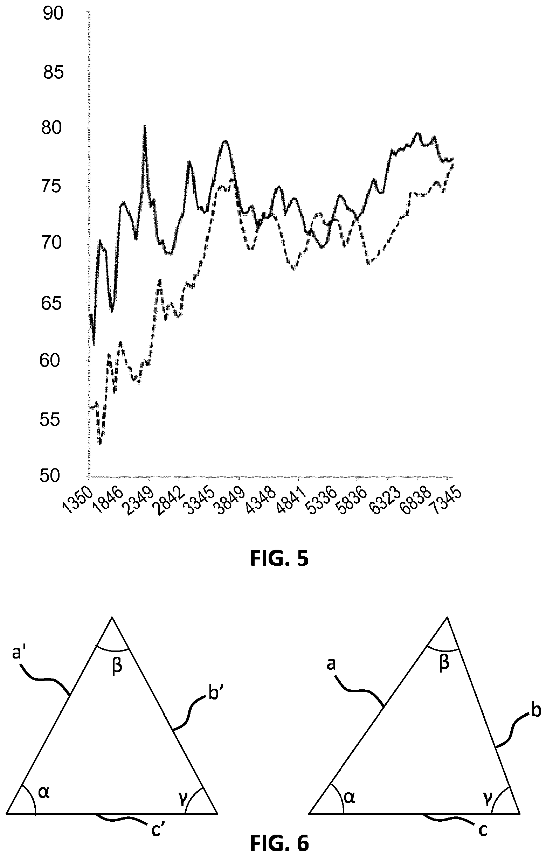

La figure 5 représente un graphique de la mesure de la somme des bruits magnétiques. L'axe des ordonnées du graphique est en décibel et l'axe des abscisses est en tours par minute. La mesure est effectuée dans une chambre semi-anéchoïque.

Une chambre semi-anéchoïque, aussi appelée chambre sourde, est une salle d'expérimentation dont toutes les parois, excepté le sol, sont recouvertes de dièdres. Ces dièdres absorbent les ondes sonores en reproduisant des conditions de champ libre (pas de réverbération sur les parois) et ne provoquant donc pas d'écho pouvant perturber les mesures. Les dièdres sont généralement constitués d'un matériau poreux (mousse de polymère, fibre de verre) qui absorbe les ondes sonores.

Ladite chambre est utilisée pour calculer la puissance acoustique des alternateurs.

Pour effectuer les mesures, il est nécessaire d'avoir plus d'éléments :

- une structure pour fixer l'alternateur,
- vingt microphones disposés en arc de cercle à 1 mètre autour de l'alternateur,
- un moteur électrique,
- un tachymètre,
- un automate,
- une batterie,
- une charge électronique
- un générateur de signaux
- un logiciel de mesure : LMS, (« *Louvain Mesure System* » en terminologie anglo-saxonne, ou système de mesure Louvain en français, marque déposée).

Le calcul de la puissance dans la chambre est la résultante de calculs effectués par le logiciel à partir de la pression acoustique (en Pa) mesurée à l'aide des vingt microphones disposés tout autour de l'alternateur. Ces mesures de pression sont effectuées en fonction de la fréquence de rotation de la machine pour les différentes positions des microphones (par exemple, la position des microphones est issue de la norme NF EN ISO 3745).

Les calculs sont effectués grâce à la formule (approchée définie par la norme) suivante :

$$Lw = \overline{Lp} + 10\log \left(\frac{S}{S0}\right) + K$$

Avec :

- Lw = Niveau de puissance acoustique en dB(A)
- $\overline{Lp}$ = Niveau de pression acoustique mesuré en dB(A)
- S = L'aire de l'hémisphère d'essai = $2\pi$ m$^2$
- S0 = L'aire de référence = 1m$^2$
- K = Correction qui tient compte de la température ambiante et de la pression

Cette figure montre la comparaison de deux mesures entre :

- un alternateur possédant des roues polaires dont chaque dent est constituée d'un premier côté identique au deuxième côté, et
- un alternateur possédant des roues polaires dont une roue polaire à des dents dont un premier côté a est plus grand qu'un deuxième côté b.

Le graphique montre que la différence de décibel (dB) entre les deux alternateurs est de l'ordre de 12 dB. La configuration de l'alternateur correspondant à l'objet de la présente invention est optimisée et permet la réduction des sommes des bruits magnétiques de l'ordre de 10%.

La figure 6 montre comment calculer le ratio. Il y a une représentation de deux dents, une symétrique et une dissymétrique. En passant de la dent symétrique à la dent dissymétrique, on a une variation de 2,15°. L'angle a, dans la dent symétrique, est de 60° et dans la dent dissymétrique de 57,85°. L'angle $\beta$ est identique : 60°. L'angle $\gamma$ est, dans la dent symétrique, est de 60° et dans la dent dissymétrique de 62,15°.

Calcul du ratio :
On a c=c'=27 mm.

$$\tan(57,85) = \frac{b}{c}$$

$$\tan(57,85).c = b$$

$$b = tan(57,85).27 = 41,81mm$$

$$\sin(57,85) = \frac{b}{a} \quad avec\ b = 41,81mm$$

$$\sin(57,85) = \frac{41,81}{a}$$

$$a = \frac{41,81}{\sin(57,85)} = 49,38mm$$

Ratio :

$$1 - \frac{a}{b} = 1 - \frac{49.38}{41.81} = 0,15$$

Le calcul du ratio correspond au calcul de la figure 5 dans lequel l'alternateur possède une roue polaire avec des dents dont chaque premier côté a est plus grand que le deuxième côté b.

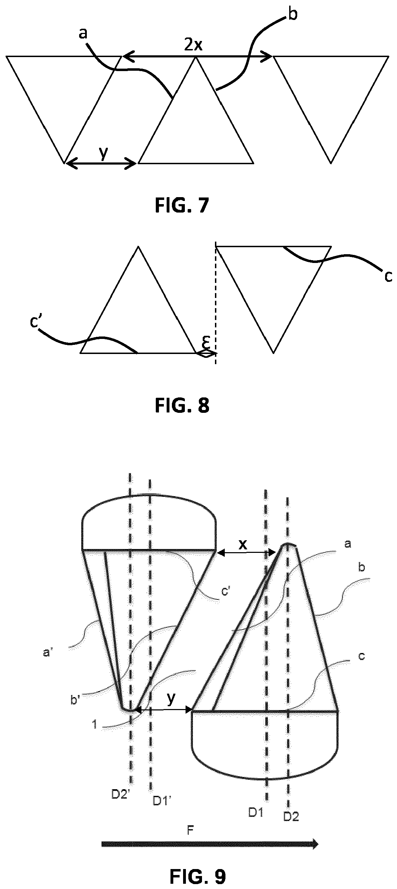

La figure 7 montre un aspect de l'invention qui contribue à éviter les courts-circuits magnétiques.

Dans un mode de réalisation, le sommet d'une dent d'une roue polaire est à équidistance des bases proximales de deux dents situées de part et d'autre du sommet de ladite dent. La longueur, noté 2x, correspond à la distance entre deux extrémités proximales de la base de deux dents adjacentes de la même roue polaire.

La figure 8 montre un décalage d'implantation lorsque les deux roues polaires sont assemblées. La distance, notée $\varepsilon$, entre une extrémité de la base c d'une dent de la première roue polaire et l'extrémité proximale de la base c' d'une dent de la deuxième roue polaire est supérieure à la demi largeur de la base c d'une dent de la première roue polaire ou de la base c' d'une dent de la deuxième roue polaire. Cette caractéristique évite d'avoir un court-circuit magnétique entre la première roue polaire et la deuxième roue polaire.

La figure 9 montre un aspect de l'invention. Sur cette figure, la dent de la deuxième roue polaire possède son premier côté a' plus petit que le deuxième côté b'. Cette différence implique un décalage entre la droite D2' et D1'. La droite D2' est avant la droite D1' par rapport au sens de rotation représenté par la flèche F.
La dent de la première roue polaire possède son premier côté a plus grand que le deuxième côté b. Cette différence implique un décalage entre la droite D1 et D2. La droite D2 est après la droite D1 par rapport au sens de la flèche F. Ainsi, la première roue polaire est en retard par rapport au sens de rotation et la deuxième roue est en avance par rapport au sens de rotation. Dans l'exemple représenté, la valeur du décalage des deux roues polaires est le même en valeur absolue. Autrement dit, les deux roues polaires ont le même ratio en valeur absolue. Ceci a pour effet que les distances x et y sont égales. Il est ainsi possible d'insérer des aimants de forme parallélépipédique entre les griffes.

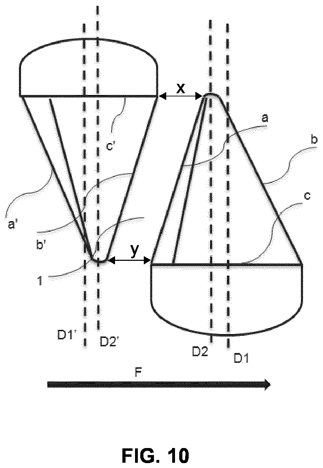

La figure 10 montre un autre aspect de l'invention, dans lequel la première roue polaire est en avance par rapport au sens de rotation et la deuxième roue est en retard par rapport au sens de rotation. En effet, la dent de la deuxième roue polaire possède son premier côté a' plus grand que le deuxième côté b' et la dent de la première roue polaire possède son premier côté a plus petit que le deuxième côté b.

Les modes de réalisation des figures 9 et 10 ont en commun que l'une des roues polaires à ses dents en avance par rapport au sens de rotation et l'autre des roues polaires à ses dents en retard par rapport au sens de rotation. Dans le cas où le décalage de chaque roue polaire est de même valeur, en valeur absolue, il existe alors un espace de largeur constante (x, y) entre les roues polaires.

NOMENCLATURE

  a, a' premier côté de la dent
  b, b' deuxième côté de la dent
  c, c' base de la dent
  α angle formé entre le premier côté et la base de la dent
  β angle formé entre le premier côté et le deuxième côté
  γ angle formé entre le deuxième côté et la base de la dent
  F sens de rotation du rotor
  X distance entre l'extrémité de la base d'une roue polaire et l'extrémité du premier côté le plus proche de l'autre roue polaire
  Y distance entre l'extrémité d'une roue polaire et l'extrémité de la base la plus proche de l'autre roue polaire
  D1, D1' droite perpendiculaire à la base passant par son milieu
  D2, D2' bissectrice de l'angle formé par le premier côté et le deuxième côté

**Revendications**

1. Rotor (10) de machine électrique tournante, comportant :

    - un arbre central ;
    - un noyau annulaire coaxial à l'arbre ;
    - un bobinage qui s'étend radialement autour du noyau ;
    - une première roue polaire et une deuxième roue polaire agencées axialement de part et d'autre du noyau et du bobinage, chaque roue polaire comportant une pluralité de dents de forme triangulaire dont la base (c, c') est tangente à la roue polaire et comportant un premier côté (a, a'), et un deuxième côté (b, b'), de sorte que chaque premier côté (a, a') de la première roue polaire soit en vis-à-vis d'un deuxième côté (b, b') de la deuxième roue polaire, au niveau de l'espace inter-dents ;

   caractérisé en ce les dents de l'une de la première ou deuxième roue polaire est telle que la longueur du premier côté (a, a') est supérieure strictement à la longueur du deuxième côté (b, b') ;
   et en ce que les dents de l'autre de la première ou deuxième roue polaire est telle que la longueur du premier côté (a, a') est inférieure strictement à la longueur du deuxième côté (b, b').

2. Rotor selon la revendication 1, dans lequel la pluralité des dents de la première roue polaire a un ratio R1 égal à 1-(a/b) et la pluralité des dents de la deuxième roue polaire a un ratio R2 égal à 1-(a'/b').

3. Rotor selon la revendication 2, dans lequel, en valeur absolue, R1 étant égal à R2 tout en étant différent de zéro, le ratio étant inférieur ou égal à 0,8, notamment inférieur ou égal à 0,5.

4. Rotor selon l'une des revendications 1 à 3, dans lequel la distance entre une extrémité de la base d'une dent de la première roue polaire et l'extrémité proximale de la base d'une dent de la deuxième roue polaire est supérieure à la demi largeur de la base d'une dent de la première roue polaire ou de la base d'une dent de la deuxième roue polaire.

5. Rotor selon l'une des revendications 1 à 4, dans lequel les premiers côtés (a, a') ou les deuxièmes côtés (b, b') des dents des roues polaires comportent un bord arrondi.

6. Rotor selon l'une des revendications précédentes, dans lequel l'arbre comporte un tronçon d'entrainement dont la section, suivant un plan radial, est non lisse, et qui est emmanché axialement à force dans un alésage de fixation d'un composant du rotor de manière à solidariser en rotation l'arbre avec la première roue polaire et la deuxième roue polaire.

7. Rotor selon l'une des revendications précédentes, comportant des aimants (1), les aimants étant agencés entre deux dents adjacentes qui appartiennent aux première et deuxième roues polaires respectivement.

8. Rotor selon la revendication 7, les aimants étant à bord parallèles.

9. Machine électrique tournante pour véhicule automobile, par exemple étant un alternateur, comportant un rotor selon l'une quelconque des revendications précédentes.

**Patentansprüche**

1. Rotor (10) einer Klauenpolmaschine, umfassend:

   - eine zentrale Welle;
   - einen ringförmigen Kern koaxial zur Welle;
   - eine Wicklung, die sich radial um den Kern erstreckt;
   - ein erstes Polrad und ein zweites Polrad, die axial beiderseits des Kerns und der Wicklung angeordnet sind, wobei jedes Polrad eine Vielzahl von Zähnen von dreieckiger Form umfasst, deren Basis (c, c') das Polrad tangiert, und umfassend eine erste Seite (a, a') und eine zweite Seite (b, b'), so dass jede erste Seite (a, a') des ersten Polrades gegenüber einer zweiten Seite (b, b') des zweiten Polrades im Bereich des Zahnzwischenraums angeordnet ist;

   dadurch gekennzeichnet, dass die Zähne eines von dem ersten oder zweiten Polrad derart sind, dass die Länge der ersten Seite (a, a') unbedingt größer als die Länge der zweiten Seite (b, b') ist; und dass die Zähne des anderen von dem ersten oder zweiten Polrad derart sind, dass die Länge der ersten Seite (a, a') unbedingt kleiner als die Länge der zweiten Seite (b, b') ist.

2. Rotor nach Anspruch 1, bei dem die Vielzahl der Zähne des ersten Polrades ein Verhältnis R1 gleich 1-(a/b) hat, und die Vielzahl der Zähne des zweiten Polrades ein Verhältnis R2 gleich 1-(a'/b') hat.

3. Rotor nach Anspruch 2, bei dem im Absolutwert, wobei R1 gleich R2 ist, während es ungleich Null ist, wobei das Verhältnis kleiner oder gleich 0,8, insbesondere kleiner oder gleich 0,5 ist.

4. Rotor nach einem der Ansprüche 1 bis 3, bei dem der abstand zwischen einem Ende der Basis eines Zahns des ersten Polrades und dem proximalen Ende der Basis eines Zahns des zweiten Polrades größer als die halbe Breite der Basis eines Zahns des ersten Polrades oder der Basis eines Zahns des zweiten Polrades ist.

5. Rotor nach einem der Ansprüche 1 bis 4, bei dem die ersten Seiten (a, a') oder die zweiten Seiten (b, b') der Zähne der Polräder einen abgerundeten Rand umfassen.

6. Rotor nach einem der vorhergehenden Ansprüche, bei dem die Welle einen Antriebsabschnitt umfasst, dessen Querschnitt entlang einer Radialebene nicht glatt ist, und der axial fest in eine Befestigungsbohrung einer Komponente des Rotors eingesteckt ist, um die welle mit dem ersten Polrad und dem zweiten Polrad drehfest zu verbinden.

7. Rotor nach einem der vorhergehenden Ansprüche, umfassend Magnete (1), wobei die Magnete zwischen zwei aneinandergrenzenden Zähnen, die dem ersten bzw. dem zweiten Polrad angehören, angeordnet sind.

8. Rotor nach Anspruch 7, wobei die Magnete mit parallelen Rändern sind.

9. Klauenpolmaschine für ein Kraftfahrzeug, beispielsweise einen Wechselstromgenerator, umfassend einen Rotor nach einem der vorhergehenden Ansprüche.

**Claims**

1. Rotor (10) of a rotary electric machine, comprising:

   - a central shaft;
   - an annular core coaxial with the shaft;
   - a coil extending radially around the core;
   - a first pole wheel and a second pole wheel arranged axially one on each side of the core and of the coil, each pole wheel comprising a plurality of claws of triangular shape of which the base (c, c') is tangential to the pole wheel and comprising a first side (a, a') and a second side (b, b') such that each first side (a, a') of the first pole wheel faces a second side (b, b') of the second pole wheel, at the claw-pole gap; **characterized in that** the claws of one out of the first and second pole wheels are such that the length of the first side (a, a') is strictly greater than the length of the second side (b, b');

   and **in that** the claws of the other out of the first and second pole wheels are such that the length of the first side (a, a') is strictly less than the length of the second side (b, b').

2. Rotor according to Claim 1, in which the plurality of claws of the first pole wheel has a ratio R1 equal to 1-(a/b) and the plurality of claws of the second pole wheel has a ratio R2 of 1-(a'/b').

3. Rotor according to Claim 2, in which, in terms of absolute value, R1 being equal to R2 while at the same time being different from zero, the ratio being less than or equal to 0.8, notably less than or equal to 0.5.

4. Rotor according to one of Claims 1 to 3, in which the distance between one end of the base of a claw of the first pole wheel and the proximal end of the base of a claw of the second pole wheel is greater than half the width of the base of a claw of the first pole wheel or half the width of the base of a claw of the second pole wheel.

5. Rotor according to one of Claims 1 to 4, in which the first sides (a, a') or the second sides (b, b') of the claws of the pole wheels have a rounded edge.

6. Rotor according to one of the preceding claims, in which the shaft comprises a drive portion of which the cross section, in a radial plane, is non-smooth, and which is force-fitted axially into a rotor component fixing bore so as to cause the shaft to rotate as one with the first pole wheel and the second pole wheel.

7. Rotor according to one of the preceding claims, comprising magnets (1), the magnets being arranged between two adjacent claws belonging respectively to the first and second pole wheels.

8. Rotor according to Claim 7, the magnets having parallel edges.

9. Rotor electric machine for a motor vehicle, for example an alternator, comprising a rotor according to any one of the preceding claims.

**FIG. 1**

**FIG. 2**

**FIG. 3**

**FIG. 4**

**FIG. 5**

**FIG. 6**

**FIG. 7**

**FIG. 8**

**FIG. 9**

**FIG. 10**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20070024153 A
- US 4201930 A
- US 5449962 A
- DE 1932641 A1